# FASCICULE DE BREVET EUROPEEN

(11) **EP 2 173 687 B1**
(45) Date de publication et mention de la délivrance du brevet: **04.05.2011**
(21) Numéro de dépôt: 08774688.9
(22) Date de dépôt: 03.07.2008
(51) Int. Cl.: C04B 41/87, C10B 29/06, F27D 1/16

(54) **PROCEDE DE TRAITEMENT DE CHAMBRE A PAROIS REFRACTAIRES**
VERFAHREN ZUR BEHANDLUNG EINER KAMMER MIT FEUERFESTEN WÄNDEN
METHOD OF TREATING A CHAMBER HAVING REFRACTORY WALLS

(30) Priorité: 05.07.2007 BE 200700335
(43) Date de publication de la demande: 14.04.2010
(73) Titulaire: FIB-SERVICES INTELLECTUAL S.A., 1724 Luxembourg (LU)
(72) Inventeur: DI LORETO, Osvaldo, B-7300 Boussu (BE)
(74) Mandataire: Luys, Marie-José A.H.
(86) Numéro de dépôt international: PCT/EP2008/058561
(87) Numéro de publication internationale: WO 2009/004051

(56) Documents cités:
- EP-A- 0 994 158
- JP-A- 7 247 189

## Description

La présente invention est relative à un procédé de traitement d'une chambre à parois réfractaires, comportant

une projection dans ladite chambre, en présence d'oxygène, d'une composition de traitement comprenant
- au moins un composé organique de silicium formant une partie majoritaire en poids de ladite composition et
- au moins un hydrocarbure capable, en présence d'oxygène, de donner lieu, à une première température, à une réaction exothermique, et
   une élévation de température de ladite composition de traitement projetée jusqu'à au moins ladite première température (voir par exemple JP-O7-247189).

Les parois réfractaires, qu'elles soient constituées de briques ou d'un matériau monolithique, montrent avec le temps des signes de dégradations, en particulier une augmentation de leur perméabilité aux gaz et composés volatils. C'est notamment le cas des parois de fours à coke, constituées de briques de silice, qui délimitent les chambres de cokéfaction et les carneaux de chauffage. Par fatigue thermique et mécanique, un réseau de microfissures se crée au sein de ces parois, ce qui donne lieu à des passages de composés organiques de la chambre de cokéfaction vers les carneaux, et de là vers la cheminée (émission de composés organiques volatils - COV - dont la teneur limite est réglementée et contrôlée par les autorités).

Comme ces microfissures ne sont pas repérables individuellement étant donné leur dimension, un traitement ou une approche globale doit donc être recherchée.

Dans la demande de brevet japonaise JP-O7-247189, on décrit une réparation d'un espace étroit d'une paroi réfractaire en projetant à cet endroit un mélange de gaz silane et d'oxygène ou de gaz contenant de l'oxygène, de manière à former une courte flamme, ce mélange pouvant contenir une poudre de formation de réfractaire ainsi qu'éventuellement en outre un hydrocarbure. Ce procédé présente l'inconvénient de faire usage d'un gaz silane hautement instable, et de ce fait on imagine difficilement la possibilité de l'appliquer en pratique en industrie, étant donné sa dangerosité (combustion explosive).

Dans le brevet européen EP-B-0708069, le procédé consiste à projeter sur la paroi réfractaire, à une température située entre 500 et 1200°C, une suspension aqueuse comprenant en majorité du silicate de sodium, un composé du lithium (hydroxyde ou carbonate de Li), un borate de métal alcalin et un composé de type organosilicate de sodium soluble dans l'eau. Par décomposition de ce dernier et réaction avec les autres constituants, il se forme une couche fondue ou vitreuse à la surface de la paroi réfractaire traitée, qui diminue sa perméabilité aux gaz.

Par la demande de brevet internationale PCT WO 03/076357 on connaît aussi un procédé d'atomisation à sec d'un mélange pulvérulent comprenant des silicates de métal alcalin, des sels alcalins (carbonate de Na ou de K), un agent durcisseur (borate de Na ou acide borique) et un produit de finition (sulfate de Na). La couche vitreuse ou céramique ainsi produite améliore l'état de surface et est censée obturer les fissures.

Pour que, par l'un ou l'autre de ces trois procédés antérieurs, on parvienne à obturer l'entièreté du réseau des microfissures développées sur toute la surface des parois réfractaires concernées (environ 100 mètres carrés par chambre de four à coke !), il faudrait réaliser un travail considérable, particulièrement long et difficile, surtout aux endroits inaccessibles. En effet, dans ces procédés, les seuls endroits traités sont ceux effectivement atteints par le jet de projection et, comme la position exacte des microfissures n'est pas détectable, un traitement de la surface entière s'impose. Le traitement s'effectue toujours dans la chambre ouverte afin de permettre à l'opérateur de bien visualiser l'emplacement de la paroi qui est à réparer et d'orienter la lance de projection au bon endroit.

Un traitement s'adressant, dans sa globalité, à toute la surface concernée par ces microfissures n'est pas prévu dans l'art antérieur et il est par conséquent à rechercher.

On connaît également des compositions de revêtement à base de diorganopolysiloxane (EP-A-0994158) ou de silsesquioxane et de polysilazane (US-B-5776599) éventuellement dans un solvant hydrocarboné qui sont destinées à être appliquées à froid sur des substrats, notamment des composants électroniques, puis chauffées pour leur durcissement.

Pour résoudre les problèmes précités présentés par les parois réfractaires de chambres de traitement, on a prévu suivant l'invention de mettre en oeuvre un procédé tel qu'indiqué au début, dans lequel
la projection en présence d'oxygène a lieu dans la chambre fermée où la composition de traitement, dans un état majoritairement liquide, est pulvérisée sous la forme de particules en suspension, et en ce que le procédé comprend en outre
pendant ladite réaction exothermique, une décomposition dudit au moins un composé organique de silicium avec formation d'un aérosol de silice colloïdale dans la chambre fermée et établissement d'une surpression dans celle-ci et
un étalement d'une couche de silice colloïdale sur les parois réfractaires de ladite chambre avec, à la suite de ladite surpression, pénétration de la silice colloïdale dans les microfissures des parois réfractaires.

Avantageusement, cette composition majoritairement liquide est projetée sous pression dans un jet d'oxygène ou de gaz contenant de l'oxygène à l'intérieur de la chambre à parois réfractaires à traiter de manière à former une suspension de particules liquides à l'intérieur du volume de la chambre qui est à l'état fermé. Cette projection a lieu de préférence alors que la chambre n'a pas été refroidie ce qui représente une économie notoire d'énergie. Ledit au moins un hydrocarbure va, en présence de l'oxygène et à la température élevée de la chambre, de préférence d'au moins 800°C, donner lieu à une réaction exothermique. Cette combustion va entraîner la décomposition du ou des composés organiques de silicium avec formation dans la chambre fermée d'un aérosol de silice colloïdale et une élévation notable et rapide de la pression dans celle-ci. L'aérosol de silice colloïdale se répand alors dans tout le volume de la chambre. Une partie de cette silice colloïdale se dépose sur la surface des parois réfractaires de la chambre et, par l'effet de la surpression qui y règne, une autre partie est entraînée dans les microfissures et s'y dépose jusqu'à leur obturation. Le traitement est donc global sur toute la surface des parois réfractaires et dans toutes les microfissures qui pourraient s'y trouver.

Par l'expression selon laquelle ledit au moins un composé organique de silicium forme une partie majoritaire en poids de la composition de traitement, il faut entendre que la fraction pondérale du ou des composés organiques de silicium est supérieure à celle de tout autre constituant de la composition.

Par l'expression selon laquelle la composition de traitement est pulvérisée dans un état majoritairement liquide, il faut entendre que tous ses composants sont liquides ou que les composants liquides de cette composition forment une fraction pondérale supérieure à celle de tout autre composant de celle-ci. Avantageusement, la composition sera donc un liquide, mais elle pourra aussi se présenter sous la forme d'un liquide dans lequel des particules solides sont en suspension.

Suivant une forme de réalisation de l'invention, ledit au moins un composé organique de silicium est au moins partiellement soluble dans ledit au moins un hydrocarbure, de préférence totalement soluble.

Il est ainsi possible d'ajuster leurs proportions en fonction des conditions de projection (viscosité du mélange) et de combustion (enthalpie) afin d'optimiser le rendement de formation à haute température de la silice colloïdale dans la chambre à traiter. Par haute température, il faut entendre de préférence une température supérieure à 800°C. De préférence la viscosité cinématique de la composition suivant l'invention est inférieure ou égale à 100 cSt (10⁻⁴ m².s⁻¹).

Grâce à la stabilité de l'aérosol de silice colloïdale qu'elle génère, cette composition suivant l'invention peut atteindre globalement toutes les surfaces concernées à partir d'un ou de quelques points de projection selon l'ampleur du volume de la chambre ou du réacteur à traiter, ce qui représente un gain de temps considérable (pertes de production minimisées) et une certitude d'avoir atteint un maximum de microfissures à obturer.

La quantité de mélange à mettre en oeuvre est nettement réduite grâce au haut rendement de la transformation en silice des composés organiques de silicium (par exemple la transformation de diméthylsiloxane en silice = 80 % en poids) et grâce au volume spécifique élevé de la silice colloïdale obtenue, qui est compris avantageusement entre 8 et 15 litres/kg.

La manipulation du mélange liquide à projeter, bien qu'il soit inflammable, est aisée et bien maîtrisable. La projection peut se faire dans la chambre fermée par un trou pratiqué par exemple dans la porte d'accès. De préférence on utilisera le trou de visite supérieur ou un trou de chargement, qui existe habituellement dans les chambres à parois réfractaires notamment des fours à coke.

De préférence, ledit au moins un composé organique de silicium est choisi parmi le groupe constitué des silicones, siloxanes, organosilicates et siloxysilicates à chaîne linéaire, cyclique ou ramifiée, substitués ou non substitués, polymérisés ou non polymérisés et de leurs mélanges.

Avantageusement, ledit au moins un composé organique de silicium est substitué par au moins un groupement alkyle ou aryle. On peut citer par exemple des huiles ou des résines de silicone, des alkylsiloxanes, de préférence du diméthylsiloxane, des cyclosiloxanes, comme par exemple du décaméthylpentacyclosiloxane, des siloxysilicates, comme notamment du triméthylsiloxysilicate, ou encore des organosilicates, comme du tétraéthylorthosilicate.

Suivant une forme avantageuse de réalisation de l'invention, ledit au moins un hydrocarbure est choisi parmi les hydrocarbures aliphatiques ou aromatiques. On peut envisager avantageusement des hydrocarbures aliphatiques à chaîne linéaire ou cyclique, en C₅ et plus, en particulier en C₅ à C₁₂, par exemple de l'hexane, du cyclohexane, de l'heptane, ou leurs mélanges. Comme hydrocarbures aromatiques, on peut citer par exemple du benzène, du toluène, du xylène, ou leurs mélanges.

La composition de traitement suivant l'invention peut en outre comprendre au moins un additif courant dans le traitement des substrats réfractaires, par exemple un additif comme de la poudre de talc, de la chaux, du kaolin ou encore de la fumée de silice. Dans le cas d'additif solide, il se présentera avantageusement sous la forme de particules en suspension dans la composition de traitement majoritairement liquide.

Une composition de traitement suivant l'invention comprend avantageusement
a) 50 à 90 %, de préférence 70 à 80 %, en poids dudit au moins un composé organique de silicium,
b) 10 à 50 %, de préférence 20 à 30 %, en poids dudit au moins un hydrocarbure, et
c) 0 à 20 % en poids d'au moins un additif courant pour le traitement de substrats réfractaires, tel que par exemple ceux cités ci-dessus, la somme des pourcentages de a) à c) donnant 100 % en poids.

Le procédé suivant l'invention de traitement ou de réparation d'une paroi réfractaire constituant tout ou partie d'une chambre ou d'un réacteur industriel consiste avantageusement à projeter, à haute température, à l'aide d'une buse d'atomisation alimentée en un gaz comprimé contenant de l'oxygène, une composition de traitement combustible suivant l'invention. A la suite de la combustion du ou des hydrocarbures, le ou les composés organiques de silicium décomposés génèrent un aérosol de silice colloïdale qui se répand dans tout le volume de la chambre fermée et se dépose sur ses parois.

Ce dépôt de silice colloïdale, d'abord mince, finit par prendre la forme d'un matelas à la surface de la paroi réfractaire ou d'une masse de bouchage poreuse dans les microfissures, dans lesquelles il pénètre sous l'effet de la surpression provoquée par la réaction exothermique susdite dans un volume fermé.

Par gaz contenant de l'oxygène il faut entendre un gaz contenant uniquement ou partiellement de l'oxygène, comme de l'oxygène pur, de l'oxygène technique, des mélanges d'oxygène et de gaz neutre, ainsi que de l'air.

La première température susdite est de préférence supérieure à 800°C, avantageusement à 900°C.

Suivant un mode de réalisation avantageux de l'invention, le procédé comprend, après ledit étalement, une élévation de température de la chambre à une deuxième température supérieure à la première température susdite et une densification de ladite couche de silice colloïdale étalée. A cette deuxième température, par exemple supérieure à 1000°C, de préférence à 1100°C, le matelas de silice colloïdale commence à se densifier pour former un revêtement plus mince et bien adhérent à la surface de la paroi réfractaire; de même, les bouchons poreux dans les microfissures se consolident par densification.

Suivant un mode particulier de réalisation du procédé suivant l'invention, les parois réfractaires de la chambre séparent celle-ci d'un volume extérieur et le procédé comprend en outre, pendant ladite projection dans la chambre fermée, une amenée de ce volume extérieur à une pression inférieure à celle de la chambre à parois réfractaires qui favorise ladite pénétration de silice colloïdale dans lesdites microfissures. La pénétration susdite est alors induite par la dépression établie dans les microfissures.

Ledit volume extérieur est fréquemment constitué d'au moins un compartiment de combustion, comme par exemple les carneaux de chauffage des chambres de cokéfaction des fours à coke, et le procédé suivant l'invention peut alors comprendre, avant ladite projection, une amenée dudit au moins un compartiment de combustion à une pression supérieure à celle de la chambre à parois réfractaires et une inspection, dans celle-ci, d'une présence de flammèches provenant dudit au moins un compartiment de combustion par l'intermédiaire de microfissures traversant lesdites parois réfractaires. Cette étape préalable permet donc de vérifier l'existence de microfissures traversantes et la nécessité ou l'urgence d'un traitement des parois réfractaires. Un processus identique peut être réalisé après traitement pour vérifier l'efficacité de celui-ci, ce qui apparaît sous la forme d'une absence de flammèches après traitement.

La présente invention va à présent être expliquée de manière plus détaillée à l'aide d'exemples donnés ci-dessous à titre non limitatif.

### Exemple 1 (exemple de comparaison)

Dans ce premier exemple, on a projeté dans la chambre d'un four à 1000°C à l'aide d'un pistolet à air comprimé une huile de silicone pure de type diméthylsiloxane d'une viscosité de 350 cSt (3,5.10⁻⁴ m².s⁻¹). L'aérosol de silicone projeté s'enflamme difficilement dans l'atmosphère chaude de la chambre, même en le projetant contre la paroi réfractaire du four. La formation de l'aérosol de silice colloïdale n'est pas régulière et de faible rendement.

### Exemple 2 (exemple de comparaison)

Dans les mêmes conditions de projection que dans l'exemple 1, on a cette fois projeté un mélange constitué de 50 % en poids de triméthylsiloxysilicate (résine de silicone) et de 50 % en poids de décaméthylpentacyclosiloxane (huile de silicone) d'une viscosité de 450 cSt (4,5. 10⁻⁴ m².s⁻¹). La formation de l'aérosol de silice colloïdale n'est pas régulière mais présente déjà un meilleur rendement que dans le premier exemple.

### Exemple 3

Dans les mêmes conditions de projection que dans l'exemple 1, on a projeté une composition constituée de 70 % en poids de résine de silicone (triméthylsiloxysilicate) et de 30 % en poids d'un hydrocarbure aromatique (xylène), cette composition présentant une viscosité de 10 cSt (10⁻⁵ m².s⁻¹). La formation de l'aérosol de silice colloïdale est cette fois bien régulière avec un bon rendement et une très bonne stabilité (pas de retombées); la silice colloïdale ainsi formée vient adhérer sur les parois du four et forme petit à petit une couche de plusieurs mm d'épaisseur; de même les fissures existant dans cette paroi sont colonisées par cette silice jusqu'à obturation.

La température du four a ensuite été élevée jusqu'à 1200°C. Dès 1050°C, la silice commence à fritter (densification), ce qui conduit à la consolidation de la couche adhérant aux parois et des bouchons de silice comblant les fissures.

### Exemple 4

La même expérience a été réalisée dans une chambre de four à coke. On a d'abord inspecté les parois de la chambre en forçant les flammes à se former au niveau des fissures traversantes par une mise en surpression des carneaux. Une fois les portes refermées, par un orifice en bas de porte, on a réalisé à une température d'environ 950°C la pulvérisation de la composition de l'exemple 3 qui, par combustion, a généré l'aérosol de silice colloïdale et une brusque élévation de pression à l'intérieur de la chambre. La silice colloïdale s'est déposée comme attendu sur les parois de la chambre, même aux endroits les plus éloignés et y compris dans les fissures traversantes. Pour favoriser le phénomène de pénétration de la silice dans les microfissures on a en outre mis en dépression les carneaux pour créer un courant d'aspiration. A la fin de l'opération, une remise en température de la chambre (1100°C) pendant quelques heures a été observée afin de permettre la consolidation du dépôt de silice. La chambre a ensuite été inspectée par une remise sous pression des carneaux : 90 % des flammes ont été supprimés par suite d'une obturation des fissures traversantes après un seul traitement; si nécessaire un deuxième traitement peut être opéré pour parfaire le résultat ou bien, dans le cas d'une fissure à trop large ouverture, un autre procédé de réparation sera alors adopté.

### Exemple 5

Comme dans l'exemple 4, on a projeté dans une chambre de four à coke, portes fermées, le mélange de l'exemple 3, mais cette fois en utilisant de l'oxygène technique comme gaz de pulvérisation.

Cette manière de procéder permet de pulvériser en continu le mélange liquide tout en garantissant sa combustion totale et la formation avec un rendement stoechiométrique de la silice colloïdale.

Il avait en effet été remarqué qu'en procédant comme dans l'exemple 4, c'est-à-dire par projection à l'air comprimé, il peut arriver qu'en fin de projection, la quantité d'oxygène disponible dans la chambre pour la combustion devienne insuffisante, entraînant la formation de résidus carbonés (suies) et d'une silice colloïdale de moindre qualité.

### Exemple 6

Pour disposer d'une plus grande fluidité en pulvérisation, le mélange est cette fois constitué de tétraéthylorthosilicate (TEOS) (70%) et d'heptane (30%). Il est pulvérisé à l'air comprimé, comme dans l'exemple 3, dans une chambre à 1000°C.

Grâce à la pulvérisation en très fines gouttelettes, la combustion est instantanée; le nuage de silice colloïdale gagne tout le volume de la chambre à traiter et s'infiltre dans les microfissures des parois réfractaires.

### Exemple 7

Pour accélérer la densification, voire la vitrification de la surface traitée, le mélange de l'exemple 3 a fait l'objet d'un ajout de talc (10%) et de kaolin (10%) finement broyés, tenus en suspension dans le mélange liquide par agitation mécanique. Sa pulvérisation à haute température dans la chambre a conduit à la formation d'un dépôt uniforme de silice, qui se densifie plus facilement.

Il doit être entendu que la présente invention n'est en aucune façon limitée aux formes et modes de réalisation décrits ci-dessus et que bien des modifications peuvent y être apportées sans sortir du cadre des revendications annexées.

## Revendications

1. Procédé de traitement d'une chambre à parois réfractaires, comportant
une projection dans ladite chambre, en présence d'oxygène, d'une composition de traitement comprenant
- au moins un composé organique de silicium formant une partie majoritaire en poids de ladite composition et
- au moins un hydrocarbure capable, en présence d'oxygène, de donner lieu, à une première température, à une réaction exothermique, et
une élévation de température de ladite composition de traitement projetée jusqu'à au moins ladite première température,
**caractérisé en ce que** la projection en présence d'oxygène a lieu dans la chambre fermée où la composition de traitement, dans un état majoritairement liquide, est pulvérisée sous la forme de particules en suspension,
et **en ce que** le procédé comprend en outre
pendant ladite réaction exothermique, une décomposition dudit au moins un composé organique de silicium avec formation d'un aérosol de silice colloïdale dans la chambre fermée et établissement d'une surpression dans celle-ci et
un étalement d'une couche de silice colloïdale sur les parois réfractaires de ladite chambre avec, à la suite de ladite surpression, pénétration de la silice colloïdale dans les microfissures des parois réfractaires.

2. Procédé suivant la revendication 1, **caractérisé en ce qu'**il comprend, après ledit étalement, une élévation de température de la chambre à une deuxième température supérieure à la première température susdite et une densification de ladite silice colloïdale qui a été étalée en couche sur les parois réfractaires de la chambre et qui a pénétré dans lesdites microfissures.

3. Procédé suivant l'une des revendications 1 et 2, **caractérisé en ce que** les parois réfractaires de la chambre séparent celle-ci d'un volume extérieur et **en ce que** le procédé comprend en outre, pendant ladite projection dans la chambre fermée, une amenée de ce volume extérieur à une pression inférieure à celle de la chambre à parois réfractaires qui favorise ladite pénétration de silice colloïdale dans lesdites microfissures.

4. Procédé suivant la revendication 3, **caractérisé en ce que** ledit volume extérieur est constitué d'au moins un compartiment de combustion et **en ce que** le procédé comprend, avant ladite projection, une amenée dudit au moins un compartiment de combustion à une pression supérieure à celle de la chambre à parois réfractaires et une inspection, dans celle-ci, d'une présence de flammèches provenant dudit au moins un compartiment de combustion par l'intermédiaire de microfissures traversant lesdites parois réfractaires.

5. Procédé suivant l'une quelconque des revendications 1 à 4, **caractérisé en ce que** ledit au moins un composé organique de silicium est au moins partiellement soluble dans ledit au moins un hydrocarbure.

6. Procédé suivant l'une quelconque des revendications 1 à 5, **caractérisé en ce que** ledit au moins un composé organique de silicium est choisi parmi le groupe constitué des silicones, siloxanes, organosilicates et siloxysilicates à chaîne linéaire, cyclique ou ramifiée, substitués ou non substitués, polymérisés ou non polymérisés, et de leur mélange.

7. Procédé suivant l'une quelconque des revendications 1 à 6, **caractérisé en ce que** ledit au moins un composé organique de silicium est substitué par au moins un groupement alkyle ou aryle.

8. Procédé suivant l'une quelconque des revendications 1 à 7, **caractérisé en ce que** ledit au moins un hydrocarbure est choisi parmi les hydrocarbures aliphatiques ou aromatiques.

9. Procédé suivant la revendication 8, **caractérisé en ce que** ledit au moins un hydrocarbure est choisi parmi le groupe constitué de l'hexane, du cyclohexane, de l'heptane, du benzène, du toluène, du xylène et de leurs mélanges.

10. Procédé suivant l'une quelconque des revendications 1 à 9, **caractérisé en ce que** ladite composition de traitement comprend en outre au moins un additif courant dans le traitement des substrats réfractaires.

11. Procédé suivant l'une quelconque des revendications 1 à 10, **caractérisé en ce que** la composition de traitement comprend
a) 50 à 90 % en poids dudit au moins un composé organique de silicium,
b) 10 à 50 % en poids dudit au moins un hydrocarbure, et
c) 0 à 20 % en poids d'au moins un additif courant pour le traitement de substrats réfractaires,
la somme des pourcentages de a) à c) donnant 100 % en poids.

12. Procédé suivant l'une quelconque des revendications 1 à 11, **caractérisée en ce que** la composition de traitement présente une viscosité cinématique inférieure ou égale à 100 cSt (10⁻⁴ m².s⁻¹).

## Claims

1. A method for treating a chamber having refractory walls, comprising:
a spraying into said chamber, in the presence of oxygen, of a treatment composition comprising
- at least one organosilicon compound forming a majority portion by weight of said composition and
- at least one hydrocarbon capable, in the presence of oxygen, of giving rise, at a first temperature, to an exothermic reaction, and
a rise in temperature of said sprayed treatment composition to at least said first temperature,
**characterized in that** the spraying in the presence of oxygen takes place in the closed chamber where the treatment composition, in a predominantly liquid state, is atomized in the form of suspended particles,
and **in that** the method further comprises
during said exothermic reaction, a decomposition of said at least one organosilicon compound with formation of a colloidal silica aerosol in the closed chamber and the establishment of an overpressure therein, and
a spreading of a colloidal silica layer on the refractory walls of said chamber with, following said overpressure, penetration of the colloidal silica into the microcracks of the refractory walls.

2. The method as claimed in claim 1, **characterized in that** it comprises, after said spreading, a rise in temperature of the chamber to a second temperature higher than the aforesaid first temperature and densification of said colloidal silica which has been spread in a layer on the refractory walls of the chamber and which has penetrated into said microcracks.

3. The method as claimed in either of claims 1 and 2, **characterized in that** the refractory walls of the chamber separate said chamber from an external volume and **in that** the method further comprises, during said spraying into the closed chamber, a pressurizing of this external volume to a pressure lower than the pressure of the chamber having refractory walls which favors said penetration of colloidal silica into said microcracks.

4. The method as claimed in claim 3, **characterized in that** said external volume consists of at least one combustion compartment and **in that** the method comprises, before said spraying, a pressurizing of said at least one combustion compartment to a pressure higher than that of the chamber having refractory walls and an inspection, therein, of a presence of brands issuing from said at least one combustion compartment via microcracks passing through said refractory walls.

5. The method as claimed in any one of claims 1 to 4, **characterized in that** said at least one organosilicon compound is at least partly soluble in said at least one hydrocarbon.

6. The method as claimed in any one of claims 1 to 5, **characterized in that** said at least one organosilicon compound is selected from the group consisting of silicones, siloxanes, organosilicates and siloxysilicates having a linear, cyclic or branched chain, substituted or unsubstituted, polymerized or unpolymerized, and the mixtures thereof.

7. The method as claimed in any of one of claims 1 to 6, **characterized in that** said at least one organosilicon compound is substituted by at least one alkyl or aryl property of the group.

8. The method as claimed in any one of claims 1 to 7, **characterized in that** said at least one hydrocarbon is selected from aliphatic or aromatic hydrocarbons.

9. The method as claimed in claim 8, **characterized in that** said at least one hydrocarbon is selected from the group consisting of hexane, cyclohexane, heptane, benzene, toluene, xylene and mixtures thereof.

10. The method as claimed in any one of claims 1 to 9, **characterized in that** said treatment composition further comprises at least one additive commonly used in the treatment of refractory substrates.

11. The method as claimed in any one of claims 1 to 10, **characterized in that** the treatment composition comprises
a) 50 to 90% by weight of said at least one organosilicon compound,
b) 10 to 50% by weight of said at least one hydrocarbon, and
c) 0 to 20% by weight of at least one additive commonly used in the treatment of refractory substrates,
the sum of the percentages of a) to c) giving 100% by weight.

12. The method as claimed in any one of claims 1 to 11, **characterized in that** the treatment composition has a kinematic viscosity lower than or equal to 100cSt (10-4 m2.s-1).

## Patentansprüche

1. Verfahren zur Behandlung einer Kammer mit hitzebeständigen Wänden, aufweisend :
ein Versprühen in der Kammer, in Gegenwart von Sauerstoff, einer Behandlungszusammensetzung umfassend
- mindestens eine organische Siliciumverbindung, die einen überwiegenden Gewichtsanteil an der Zusammensetzung ausmacht, und
- mindestens einen Kohlenwasserstoff, der in Gegenwart von Sauerstoff dazu befähigt ist, bei einer ersten Temperatur eine exotherme Reaktion zu bewirken, und
eine Erhöhung der Temperatur der versprühten Behandlungszusammensetzung mindestens auf die erste Temperatur,
**dadurch gekennzeichnet, dass** das Versprühen in Gegenwart von Sauerstoff in der geschlossenen Kammer erfolgt, wobei die Behandlungszusammensetzung, die überwiegend in einem flüssigen Zustand ist, in Form von Partikeln versprüht wird, die sich in Suspension befinden,
und **dadurch**, dass das Verfahren weiterhin Folgendes umfasst
während der exothermen Reaktion, eine Zersetzung der mindestens einen organischen Siliciumverbindung unter Bildung eines kolloidalen Siliciumdioxid-Aerosols in der geschlossenen Kammer und Erzeugung eines Überdrucks in der letzteren und
ein flächiges Ausbreiten einer Schicht aus kolloidalem Siliciumdioxid auf den hitzebeständigen Wänden der Kammer, wobei es infolge des Überdrucks zu einem Eindringen des kolloidalen Siliciumdioxids in die Mikrorisse der hitzebeständigen Wände kommt.

2. Verfahren nach Anspruch 1, **dadurch gekennzeichnet, dass** es, nach dem flächigen Ausbreiten, eine Erhöhung der Temperatur der Kammer auf eine zweite Temperatur umfasst, welche höher als die obige erste Temperatur ist, sowie eine Verdichtung des kolloidalen Siliciumdioxids, das sich schichtartig auf den hitzebeständigen Wänden der Kammer flächig ausgebreitet hat und das in die Mikrorisse eingedrungen ist.

3. Verfahren nach einem der Ansprüche 1 und 2, **dadurch gekennzeichnet, dass** die hitzebeständigen Wände der Kammer diese von einem Außenvolumen trennen, und **dadurch**, dass das Verfahren weiterhin, während des Versprühens in der geschlossenen Kammer, eine Senkung des Druck in diesem Außenvolumen auf einen Wert umfasst, der geringer als derjenige in der Kammer mit den hitzebeständigen Wänden ist, was das Eindringen des kolloidalen Siliciumdioxids in die Mikrorisse begünstigt.

4. Verfahren nach Anspruch 3, **dadurch gekennzeichnet, dass** das Außenvolumen aus mindestens einem Verbrennungsraum besteht, und **dadurch**, dass das Verfahren, vor dem Versprühen, eine Erhöhung des Drucks in dem mindestens einen Verbrennungsraum auf einen Wert umfasst, der höher als derjenige in der Kammer mit den hitzebeständigen Wänden ist, sowie eine Sichtprüfung in der letzteren auf das Vorkommen von Glutteilchen, die aus dem mindestens einen Verbrennungsraum stammen, wobei sie über die Mikrorisse durch die hitzebeständigen Wände gelangt sind.

5. Verfahren nach einem beliebigen der Ansprüche 1 bis 4, **dadurch gekennzeichnet, dass** die mindestens eine organische Siliciumverbindung mindestens teilweise in dem mindestens einen Kohlenwasserstoff löslich ist.

6. Verfahren nach einem beliebigen der Ansprüche 1 bis 5, **dadurch gekennzeichnet, dass** die mindestens eine organische Siliciumverbindung aus der Gruppe ausgewählt ist, die aus den Silikonen, den Siloxanen, den Organosilicaten und Siloxysilicaten mit geradliniger, cyclischer oder verzweigter Kette, in substituiertem oder unsubstituiertem, polymerisiertem oder nicht polymerisiertem Zustand, sowie deren Mischung besteht.

7. Verfahren nach einem beliebigen der Ansprüche 1 bis 6, **dadurch gekennzeichnet, dass** die mindestens eine organische Siliciumverbindung mit mindestens einer Alkyl- oder Arylgruppe substituiert ist.

8. Verfahren nach einem beliebigen der Ansprüche 1 bis 7, **dadurch gekennzeichnet, dass** der mindestens eine Kohlenwasserstoff aus den aliphatischen oder aromatischen Kohlenwasserstoffen ausgewählt ist.

9. Verfahren nach Anspruch 8, **dadurch gekennzeichnet, dass** der mindestens eine Kohlenwasserstoff aus der Gruppe ausgewählt ist, die aus Hexan, Cyclohexan, Heptan, Benzol, Toluol, Xylol und deren Mischungen besteht.

10. Verfahren nach einem beliebigen der Ansprüche 1 bis 9, **dadurch gekennzeichnet, dass** die Behandlungszusammensetzung darüber hinaus mindestens einen Zusatzstoff umfasst, der üblicherweise bei der Behandlung hitzebeständiger Substrate verwendet wird.

11. Verfahren nach einem beliebigen der Ansprüche 1 bis 10, **dadurch gekennzeichnet, dass** die Behandlungszusammensetzung Folgendes umfasst
a) 50 bis 90 Gewichts% der mindestens einen organischen Siliciumverbindung,
b) 10 bis 50 Gewichts% des mindestens einen Kohlenwasserstoffs, und
c) 0 bis 20 % Gewichts% des mindestens einen Zusatzstoffs, der üblicherweise für die Behandlung hitzebeständiger Substrate verwendet wird, wobei die Summe der Prozentwerte von a) bis c) 100 Gewichts% ergibt.

12. Verfahren nach einem beliebigen der Ansprüche 1 bis 11, **dadurch gekennzeichnet, dass** die Behandlungszusammensetzung eine kinematische Viskosität von höchstens 100 cSt (10⁻⁴ m². s⁻¹) aufweist.
